# EUROPEAN PATENT SPECIFICATION

(11) **EP 1 819 072 B1**
(45) Date of publication and mention of the grant of the patent: **28.11.2012**
(21) Application number: 06290265.5
(22) Date of filing: 14.02.2006
(51) Int. Cl.: H04B 10/18

(54) **Optical network element with dispersion compensation**
Optisches Netzelement mit Dispersionskompensation
Elément de réseau optique avec compensation de la dispersion chromatique

(43) Date of publication of application: 15.08.2007
(73) Proprietor: Alcatel Lucent, 75007 Paris (FR)
(72) Inventor: Charlet, Gabriel, 91190 Villiers-Le-Bacle (FR); Antona, Jean-Christophe, 92120 Montrouge (FR)
(74) Representative: Sciaux, Edmond

(56) References cited:
- US-A1- 2004 057 661
- US-B1- 6 819 478
- YANG D ET AL: "FIBRE DISPERSION AND DISPERSION SLOPE COMPENSATION IN A 40-CHANNEL 10-GB/S 3200-KM TRANSMISSION EXPERIMENT USING CASCADED SINGLE-CAVITY GIRES-TOURNOIS ETALON" IEEE PHOTONICS TECHNOLOGY LETTERS, IEEE SERVICE CENTER, PISCATAWAY, NJ, US, vol. 16, no. 1, 1 January 2004 (2004-01-01), pages 299-301, XP002343364 ISSN: 1041-1135

## Description

### Background of the invention

The present invention relates to a network element for use in a Wavelength Division Multiplex (WDM) optical transmission system.

The present invention also relates to an optical Wavelength Division Multiplex (WDM) optical transmission system.

Furthermore the present invention relates to a method of compensating dispersion-related propagation effects of optical wavelength division multiplex (WDM) signals.

WDM optical signal transmission at a data rate of 10 Gbit/s is severely impacted by cross-channel non-linear effects when transmission occurs on low dispersion optical fibre, e.g., having a chromatic dispersion around 4ps/nm/km or below, which is the case with almost 50% of deployed optical fibre around the world. The main effect to be taken into account in this context is cross-phase modulation (XPM), which is a non-linear effect according to which the intensity of one optical beam influences the phase change of another optical beam. An optical fibre communications, cross-phase modulation in fibres can lead to problems with channel cross talk.

It is known in the art, that the impact of XPM can be significantly reduced by using Gires-Tournois Dispersion Compensating Modules (GT-DCM) along an optical transmission link instead of employing commonly used Dispersion Compensating Fibres (DCF). However, since in a GT-DCM chromatic dispersion effects are compensated per 50 GHz bands, which corresponds to the channel spacing in most of 10 Gbit/s systems, this approach is not compatible with state of the art 40 Gbit/s systems, which generally use a 100 GHz spacing due to the higher data rate. In such systems, the use of GT-DCMs would result in strong detrimental filtering of the transmitted channels, which must be regarded as a major drawback.

US2004/0057661 discloses a prior art LODM sytem with dispersion compensation.

### Object of the invention

It is the object of the present invention to provide a method of compensating dispersion related propagation effects of optical WDM signals, an optical WDM transmission system as well as a network element for use in such a transmission system which overcome the above-mentioned disadvantages, thus minimising the impact of cross non-linear effects due to the interaction between adjacent channels for transmitted optical signals with a first data rate, e.g. 10 Gbit/s, while being compatible with the transmission of optical signals with a different data rate, e.g. 40 Gbit/s.

### Description of the invention

According to a first aspect of the present invention, the object is achieved by providing a network element for use in a wavelength division multiplex optical transmission system, comprising:
- at least one demultiplexing means adapted to demultiplex a received wavelength division multiplex signal into constituent wavelength channels carrying tributary signals with at least a first and at least a second data rate,
- at least one first Dispersion Compensating Module connected with the demultiplexing means for receiving constituent wavelength channels carrying tributary signals having said first data rate, and
- at least one bypass bypassing the first dispersion compensating module and connected with the demultiplexing means for receiving constituent wavelength channels carrying tributary signals having said second data rate.

According to a second aspect of the present invention, the object is also achieved by providing a wavelength division multiplex optical transmission system, comprising:
- at least one source of wavelength division multiplex optical signals having constituent wavelength channels which carry tributary signals with at least a first and at least a second data rate,
- a number of optical fibre spans for propagating said optical signals, and
- at least one node for connecting a number of optical fibre spans, said node comprising the network element according to said first aspect of the present invention.

Furthermore, according to a third aspect of the present invention, the object is achieved by providing a method of compensating dispersion-related propagation effects of optical wavelength division multiplex signals, said optical signals having constituent wavelength channels which carry tributary signals with at least a first and at least a second data rate, wherein the optical signals are demultiplexed into their constituent wavelength channels, wherein tributary signals of said first date rate are routed to a dispersion compensating module, in particular a Gires-Tournois dispersion compensating module, while tributary signals of said second data rate are routed to bypass said dispersion compensating module.

Thus, in accordance with a basic idea of the present invention, specific dispersion compensating modules (DCMs), such as GT-DCMs, are used only in network elements, such as (Reconfigurable) Optical Add / Drop Multiplexers ((R)OADMs), in which the WDM signal is demultiplexed such that only certain channels with a first data rate, e.g. 10 Gbit/s, are fed to the specific dispersion compensating module, while channels with a second data rate, e.g. 40 Gbit/s, are routed to bypass said dispersion compensating module, thus obviating said negative effects of detrimental filtering of transmitted channels.

In order to enhance the tolerance to non-inear effects, such as XPM, of constituent wavelength channels with said first data rate, in particular for 10 Gbit/s transmission, in a further embodiment of the network element in accordance with the present invention the first dispersion compensating module is devised as a Gires-Tournois dispersion compensating module (GT-DCM).

Alternatively, in other embodiments of the network element accordance with the present invention the first dispersion compensating module may be devised in the form of one of a Virtually Imaged Phased Array (VIPA), a ring resonator, and a fibre Bragg grating (FBG) or in the form of any other Dispersion Compensation Module adapated to compensate chromatic dispersion within separate (periodic) spectral bands without cancelling a group delay introduced by fibre dispersion.

Generally, in the context of the present invention the first dispersion compensating module provides the functionality of dispersion compensation within certain bandwidths of optical signals while preserving a group delay between various channels. The main difference with conventionally used DCF resides in the fact that DCF has a continuous evolution of the group delay (i.e., DCF are not channelized as GT-DCM, VIPA, etc.).

In order to provide further functionality when used in a wavelength division multiplex optical transmission system, in another embodiment of the network element in accordance with the present invention the latter further comprises at least one multiplexing means for adding tributary signals of said first and / or second data rates.

In particular when tributary signals of said second data rate are added to the optical transmission system, in accordance with a further embodiment of the network element in accordance with the present invention said multiplexing means for adding tributary signals is preferably connected with said bypass in order to obviate detrimental filtering effects on the added second data rate constituent wavelength channels.

However, for to provide dispersion compensation for said second data rate constituent wavelength channels, in a further embodiment of the network element in accordance with the present invention the latter comprises a second dispersion compensating module arranged in said bypass. Generally, said second dispersion compensating module will have different properties than the first dispersion dispersion compensating module. Advantageously, said second dispersion compensating module is devised as a Dispersion Compensating Fibre (DCF) module.

In another embodiment of the network element in accordance with the present invention, for providing additional channel dropping functionality the latter may comprise at least one further demultiplexing means for dropping tributary signals of said first and / or second data rates.

In a further embodiment of the WDM optical transmission system in accordance with the present invention the constituent wavelength channels associated with the first data rate have a first bandwidth and the constituent wavelength channels associated with the second data rate have a second bandwidth, which is different from the first bandwidth. Furthermore, respective characteristic wavelengths of the constituent wavelength channels associated with the second data rate are shifted relative to a periodic comb of the constituent wavelength channels associated with the first data rate. Preferably, said respective characteristic wavelengths can be identified with the centre wavelengths of the constituent wavelength channels. Thus, in the case of constituent wavelength channels having 10 Gbit/s and 40 Gbit/s data rates with 50 GHz and 100 GHz spacing, respectively, the second data rate wavelength channels are preferably shifted by 25 GHz relative to the 50 GHz periodic comb of the first data rate wavelength channels. In this way, a 40Gbit/s channel has the same spectral occupation than two channels at 10Gbit/s. lf the wavelength were not shifted, one 40Gbit/s channel would take the place of nearly three 10Gbit/s channels.

Gires-Tournois dispersion compensating modules, as well as the other types of dispersion compensation modules proposed in embodiments in accordance with the present invention, do not necessarily have to be used instead of DCFs after each fibre span in an optical WDM transmission system: Preferably, for instance for reason of cost-effectiveness when modifying an existing transmission system, the number of modules such as GT-DCMs can be reduced with respect to the number of DCFs if a doubly periodic repartition map is used, which corresponds to conventional transmission systems including (R)OADMs or - more generally - transparent nodes. Accordingly, a GT-DCM or equivalent module could be inserted within the (R)OADMs only and would still significantly improve the overall system performance with respect to dispersion compensation. ln accordance with the present invention, for 10 / 40 Gbit/s systems, passing of the second data rate (40 Gbit/s) channels into the GT-DCM can be avoided.

Further advantages and characteristics of the present invention can be gathered from the following description of preferred embodiments given by way of example only with reference to the enclosed drawings. The features mentioned above as well as below can be used in accordance with the present invention either individually or in conjunction. The embodiments mentioned are not to be understood as an exhaustive enumeration but rather as examples with regard to the underlying concept of the present invention.

### Drawings

- Fig. 1: is a schematic block diagram of an optical transmission system in accordance with the present invention;
- Fig. 2: is a schematic block diagram of a first embodiment of the network element in accordance with the present invention;
- Fig. 3: is a schematic block diagram of a second embodiment of the network element in accordance with the present invention;
- Fig. 4: is a detailed block diagram of a third embodiment of the network element in accordance with the present invention;
- Fig. 5: is a diagram illustrating the concept of wavelength-shifting constituent wavelength channels with higher bit rate used in an embodiment of the method in accordance with the present invention;
- Fig. 6: is a block diagram of a fourth embodiment of the network element in accordance with the present invention having higher connectivity;
- Fig. 7: is a diagram for illustrating the evolution of cumulated dipersion along the transmission link in an optical transmission system in accordance with the present invention; and
- Fig. 8: is a block diagram of a fifth embodiment of the network element in accordance with the present invention .

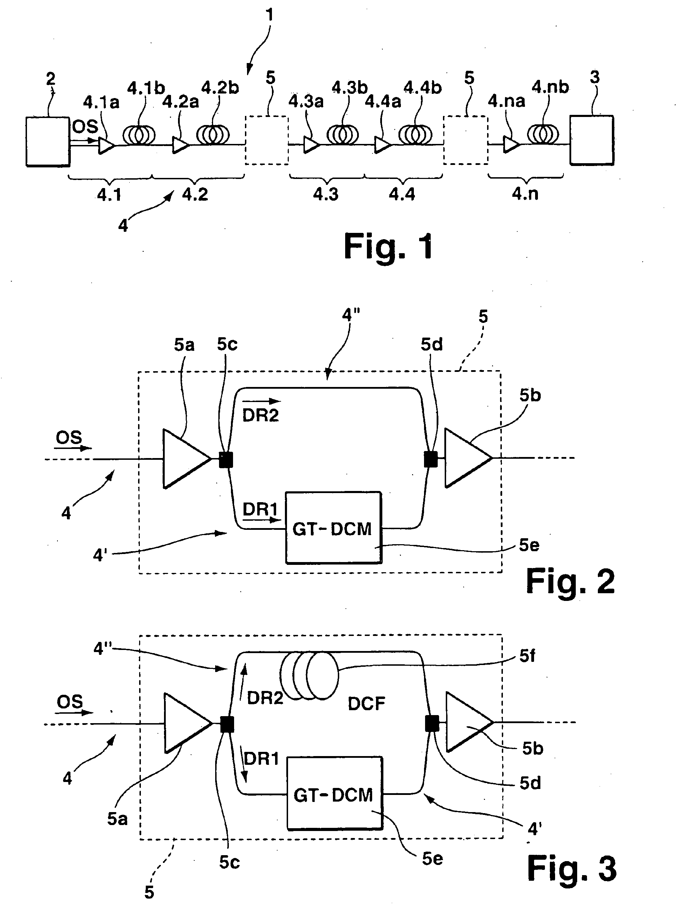

**Fig. 1** shows an optical Wavelength Division Multiplex (WDM) transmission system **1**. Said optical transmission system 1 generally comprises a source **2** of WDM optical signals having constituent wavelength channels which carry tributary signals with at least a first and at least a second data rate, e.g. 10 Gbit/s and 40 Gbit/s, and respective corresponding spectral widths, which depend on the modulation format used, e.g. Phase-Shaped Binary Transmission (PSBT) or Differential Quadrature Phase Shift Keying (DQPSK) in the example considered here. In the present Figure, transmission of said WDM optical signals is generally illustrated by means of arrow **OS**. The optical transmission system 1 further comprises a receiver **3** functioning as a sink for the transmitted optical signals OS. The source 2 and the sink 3 are operatively connected by means of an optical transmission link **4**, i.e. an optical fibre link, comprising a succession of optical fibre spans **4.1**, **4.2**,..., **4.n** for transmission of the optical signals OS. As depicted in Fig. 1, individual fibre spans 4.1, 4.2, ... generally comprise amplifying means **4.1a**, **4.2a**,..., e.g. Optical Fibre Amplifiers (OFA), including dispersion compensating means (not shown) in the form of amplifier interstage Dispersion Compensating Fibre (DCF), arranged in operative connection with respective line fiber **4.1b**, **4.2b**,..., i.e. Standard Single Mode Fiber (SSMF) or LEAF® fibre. In accordance with the present invention, a number of fibre spans of the optical transmission system 1, e.g. fibre spans 4.2, 4.4 further include a network element **5**, the configuration and functioning of which will now be explained in detail with reference to appended Figs. 2 to 7.

In the optical transmission system 1 of Fig. 1 as described so far, transmission may be severely impacted by cross-channel non-linear effects when transmission occurs over low dispersion fibre used in the respective fibre spans 4.1, 4.2, ..., in particular due to cross-phase modulation (XPM), which is a non-linear effect, where the intensity of one beam influences the phase change of another beam.

**Fig. 2** shows a schematic block diagram of a first embodiment of the network element 5 as comprised in the inventive optical transmission system 1 of Fig. 1. The network element 5 generally comprises an input amplifying means **5a** and an output amplifying means **5b,** e.g. input and output OFAs, respectively. Downstream of the input amplifying means 5a the network element 5 comprises a (tuneable) band demultiplexing means **5c** arranged in the optical transmission link 4. At the band demultiplexing means 5c the optical transmission link 4 branches into a first branch **4'** and a second branch **4"** which recombine at a band multiplexing means **5d** arranged in front of the output OFA 5b. In the first branch 4' there is located a first Dispersion Compensating Module (DCM) **5e** in the form of a Gires-Tournois (GT) dispersion compensating module. Alternatively, the first DCM 5e could be devised as a Virtually Imaged Phased Array (VIPA), a ring resonator, a fibre Bragg grating (FBG), or generally any other dispersion compensating device operable to compensate dispersion within a given bandwidth without cancelling a delay between different channels introduced by fibre dispersion, as already stated above. ln the embodiment shown, the GT-DCM 5e has a 50 GHz spacing, i.e., chromatic dispersion is compensated per 50 GHz bands within the GT-DCM, which corresponds to the standard channel spacing in 10 Gbit/s WDM optical transmission systems. In other words, the GT-DCM 5e is generally compatible only with a specific data rate and a corresponding channel spacing, respectively. To this end, the band demultiplexing means 5c are devised such that constituent wavelength channels of the optical signal OS carrying tributary signals with a first data rate are routed on the first branch 4' to the GT-DCM 5e, which is devised for to compensate chromatic dispersion of said first data rate tributary signals (arrow **DR1** in Fig. 2), i.e. 10 Gbit/s with 50 GHz spacing in the present example. However, as will be appreciated by a person skilled in the art, the present invention is not limited to the above-mentioned specific values: In general, DCM 5e can be any dispersion compensating module compatible with a specific tributary signal of the optical transmission signal OS which is branched into said module for compensation of chromatic dispersion by the band demultiplexing means 5c. Tributary signals with at least a second data rate (arrow **DR2** in Fig. 2) are routed to the second branch 4" which effectively functions as a bypass for bypassing the first DCM 5e, since the GT-DCM is not compatible with the second data rate signals, i.e. 40 Gbit/s tributary signals in the present example. Band multiplexing means 5d then recombines the tributary signals propagated on respective branches 4', 4", which are then passed to the output OFA 5b for further transmission on the optical transmission link 4.

At the installation of the network according to Fig. 2, when all the channels work at 10Gbit/s, the upper branch 4" may be cut in order to have no light going from input amplifying means 5a to output amplifying means 5b on said branch 4". If said branch is connected with a simple fiber, the loss between input amplifying means 5a and output amplifying means 5b will be very low at the wavelengths considered here, and the Amplified Spontaneous Emission (ASE) noise of the amplifying means could be too high. ln this case. it is better to completely suppress the ASE noise in a wavelength region where no channels are located.

**Fig. 3** shows a block diagram of a second embodiment of the network element 5 used in the optical transmission system 1 of Fig. 1 in accordance with the present invention. The embodiment of the network element 5 as shown in Fig. 3 is highly similar to the above-described embodiment of Fig. 2, and the same or similar elements have been assigned the same reference numerals. Referring to Fig. 3, the second embodiment of the network element 5 in accordance with the present invention differs from the above-described first embodiment (Fig. 2) in that a second dispersion compensating module (DCM) **5f** is comprised in the second branch 4" connecting the band demultiplexing means 5c with the band multiplexing means 5d for transmission of said second data rate tributary signals (arrow DR2). In the embodiment shown, said second DCM 5f is devised in the form of a Dispersion Compensating Fibre (DCF), which is generally compatible with said second data rate tributary signals, i.e. 40 Gbit/s signals with 100 GHz spacing.

The insertion loss on both paths (i.e., branches 4' and 4") should be the same in order to maintain a flat spectrum at the output of the amplifier. This can be done by using an additional Variable Optical Attenuator (VOA) (not shown) in the branch with the lowest loss.

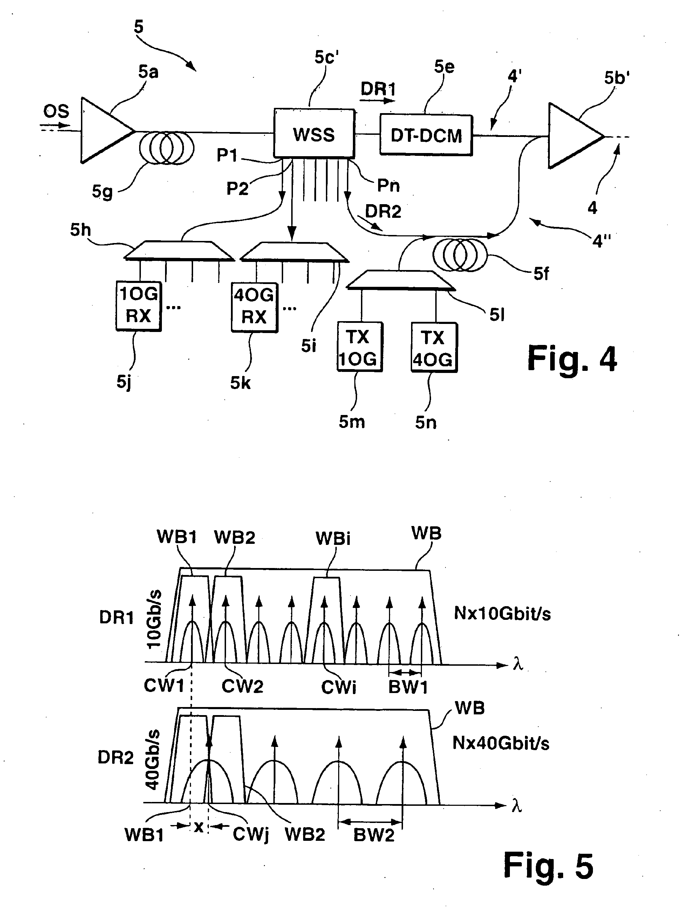

**Fig. 4** shows a more detailed block diagram of a third embodiment of the network element 5 in accordance with the present invention, as comprised in the optical transmission system 1 of Fig. 1. Again, elements already described above with reference to appended Figs. 2 and 3 have been assigned the same reference numerals in Fig. 4. Basically, the embodiment of Fig. 4 is derived from the embodiment previously described with reference to Fig. 3 and further comprises a third dispersion compensating module (DCM) **5g** arranged between the input OFA 5a and the band demultiplexing means which in the present embodiment is devised as a wavelength-selective switch (WSS) **5c'.** The WSS 5c' has a number of ports **P1, P2,..., Pn** for outputting wavelength-selected tributary signals of the optical signal OS. Port P1 is connected with a demultiplexing means **5h**, and port P2 is connected with a demultiplexing means **5i**. In operative connection with demultiplexing means 5h there are provided a number of receiver units **5j** adapted for receiving tributary signals of said first data rate, i.e. 10 Gbit/s, only one of which is depicted for reason of clarity. In operative connection with demultiplexing means 5i there are provided a number of receiver units **5k** adapted for to receive tributary signals with said second data rate, i.e. 40 Gbit/s, only one of which is depicted for reason of clarity. To port Pn of WSS 5c' is connected the (bypass) branch 4" for bypassing the GT-DCM 5e, as previously described. Upstream of the DCF compensating module 5f said branch 4" is operatively connected with a multiplexing means **5l**, which in turn is connected with a first transmitter unit **5m** and with a second transmitter unit **5n**. The first transmitter unit 5m is devised for transmitting tributary signals with said first data rate, i.e. 10 Gbit/s, and the second transmitter unit 5n is devised for transmitting tributary signals with the second data rate, i.e. 40 Gbit/s. Branches 4', 4" are recombined with an optical coupler (not shown) at output OFA **5b'**, which effectively encompasses a functionality of the band multiplexing means 5d of Figs. 2, 3.

In this way, the above-described embodiment of network element 5 of Fig. 4 effectively functions as a (Reconfigurable) Optical Add / Drop Multiplexer ((R)OADM), in which WSS 5c' is used for to route tributary signals with the first data rate to said first DCM (GT-DCM) 5e, while tributary signals with said second data rate DR2 are routed to bypass the first DCM 5e on bypass branch 4". In this way and according to the invention, optimum dispersion compensation and tolerance to cross non-linear effects is achieved for tributary signals with said first data rate DR1, while the overall system remains compatible with tributary signals of said second data rate DR2, e.g. for upgrade purposes. Further DCF 5g functions as a compensating means in a conventional way. In fact, DCF 5g can be regarded as post-compensation means for channels which are dropped at the node of Fig. 4; for the channels which continue to a subsequent node, it can be regarded as an in-line compensation means. Furthermore, rre-compensation is achieved by means of second DCM 5f (for the channels inserted at this node).

**Fig. 5** shows a schematic diagram illustrating the concept of channel shifting used in an embodiment of the method in accordance with the present invention. In the upper part of Fig. 5, a signal intensity (in arbitrary units) of tributary signals with said first data rate DR 1, i.e. 10 Gbit/s, is shown as a function of optical wavelength λ. For instance, reference numeral **WB** denotes a 400 GHz band comprising a number of so called WB pixels **WB1**, **WB2**,..., **WBi**,... which represent respective tributary signals, the centre wavelengths **CW1**, **CW2**,..., **CWi**,... of which have standard 50 GHz spacing. The lower part of Fig. 5 shows a corresponding diagram with respect to tributary signals with said second data rate DR2, i.e. 40 Gbit/s. As can be gathered from a comparison of the upper and lower parts of Fig. 5, the respective channels with DR2 tributary signals as represented by a respective centre wavelength **CWj** are wavelength-shifted by an amount **x** with respect to the 50 GHz spacing / periodic comb considered for DR1 transmission, such that centre wavelengths CWj of said DR2 transmissions effectively fall between adjacent WB pixels WB1, WB2,... of said DR1 transmissions. In this way, the demultiplexing means / WSS 5c, 5c' of Figs. 2 - 4 can readily distinguish between contributions of the first and second data rates, respectively, for to route the respective tributary signals either on branch 4' or on branch 4" (Figs. 2 - 4) according to their data rate DR1, DR2. In the present embodiment, said offset x amounts to a 25 GHz shift. Generally, the DR2 channels CWj have to be shifted by an amount, which equals half the channel spacing of the DR1 channels. The above-described concept has been disclosed in European patent application no. 05290507.2 (application title: "Wavelength Grid for DWDM"; applicant docket no. 114309) in the name of the present applicant filed on 07 March 2005, the contents of which is herewith incorporated by reference in the present document.

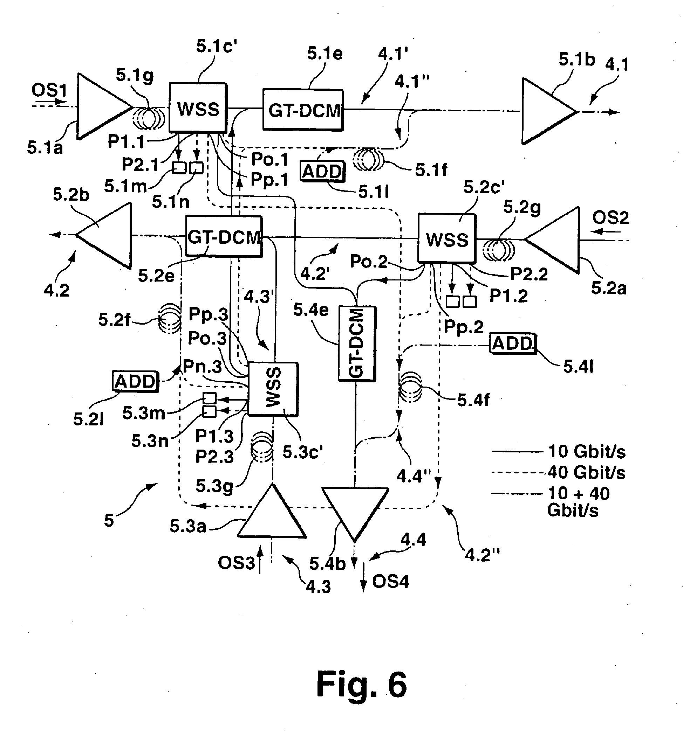

**Fig. 6** shows a detailed block diagram of a third embodiment of the network element 5 in accordance with the present invention. In the embodiment shown, there are provided a plurality of optical transmission links **4.1** - **4.4**, wherein pairs 4.1, 4.2; 4.3, 4.4 of transmission links are arranged for propagating optical signals **OS1** - **OS4** in mutually opposite directions. In this way, the network element 5 of Fig. 6 effectively functions as a node of connectivity 3 in a variant of the optical transmission system 1 of Fig. 1.

On optical transmission link 4.1 the network element 5 of Fig. 6 essentially comprises the same subunits as described above with reference to Fig. 3, wherein corresponding reference numerals comprise post-fix ".1 ". The same holds for optical transmission links 4.2 - 4.4, wherein respective subunits of network element 5 have been assigned reference numerals comprising post-fixes ".2", ".3", and ".4", respectively. In optical transmission link 4.3 the network element 5 comprises a further input OFA **5.3a** followed by DCF **5.3g** and WSS **5.3c'.** As described above with reference to Fig. 4, for propagation of tributary signals with said first data rate DR1 (e.g., 10 Gbit/s) WSS 5.3c' is connected via branch **4.3'** with GT-DCM **5.2e** in optical transmission link 4.2, thus effectively interconnecting optical transmission links 4.3 and 4.2 such that output OFA **5.2b** of optical transmission link 4.2 effectively serves as output OFA for optical signals OS3 arriving on optical transmission link 4.3. Additionally, via port **Pn.3** WSS 5.3c' is connected with bypass **4.2"** upstream of DCF **5.2f.** Further ports **Po.3** and **Pp.3** of WSS 5.3c' provide connectivity with optical transmission link 4.1 at branch **4.1'** upstream of GT-DCM **5.1e** and with branch **4.1"** upstream of DCF **5.1f,** respectively, thus effectively interconnecting optical transmission links 4.3 and 4.1. In the embodiment shown, optical transmission link 4.4 (providing a transmission direction opposite to that of optical transmission link 4.3) includes a GT-DCM **5.4e** followed by an output OFA **5.4b.** The GT-DCM 5.4e is connected with respective ports **Po.1, Po.2** of WSS **5.1c'** and WSS **5.2c'**, respectively, for receiving first data rate tributary signals intended for transmission on optical transmission link 4.4. Bypass branch **4.4"** bypassing GT-DCM 5.4e is connected with respective ports **Pp.1, Pp.2** of WSS 5.1c' and WSS 5.2c', respectively, for receiving second data rate tributary signals intended for a propagation on optical transmission link 4.4, which must not be routed via GT-DCM 5.4e. As described above with reference to Fig. 4 and in analogy with other transmission link branches 4.1 ", **4.2",** bypass branch 4.4" comprises a DCF **5.4f** for dispersion compensation of said second data rate tributary signals. As also described above with reference to Fig. 4, on every WSS 5.1c', 5.2c', 5.3c' respective ports **P1.1, P2.1; P2.1, P2.2; P1.3, P2.3** are provided for dropping specific wavelength channels, as previously described with reference to appended Fig. 4. Channel adding is provided by suitable adding means **5.11, 5.21, 5.41** (cf. Fig. 4) in operative connection with a respective bypass branch 4.1 ", 4.2", 4.4" upstream a respective DCF 5.1 f, 5.2f, 5.4f.

In this way, owing to their various respective interconnections, the subunits of network element 5 of Fig. 5 effectively constitute six network elements according to the embodiment of Fig. 4 (respectively interconnecting optical transmission links 4.1 / 4.4, 4.3 / 4.2, 4.2 / 4.4 as well as every signal transmission link 4.1 - 4.3 with itself) thus providing a network node of connectivity 3.

Referring back to the embodiments of Fig. 1, it is not necessary to use a GT-DCM instead of a DCF module after each fibre span 4.1, 4.2,.... An actual number of GT-DCMs employed can, for instance, be reduced if a doubly periodic dispersion map is used, wherein respective occurrences of GT-DCMs and DCFs repeat with different periods, as can be gathered from the illustration in Fig. 1 in conjunction with, e.g., Fig. 4, wherein every fibre span comprises at least one DCF (with two DCFs being comprised in network element 5). In contrast to this, occurrence of network element 5 is governed by another (longer) period such that only every n-th fibre span includes a GT-DCM comprised in network element 5.

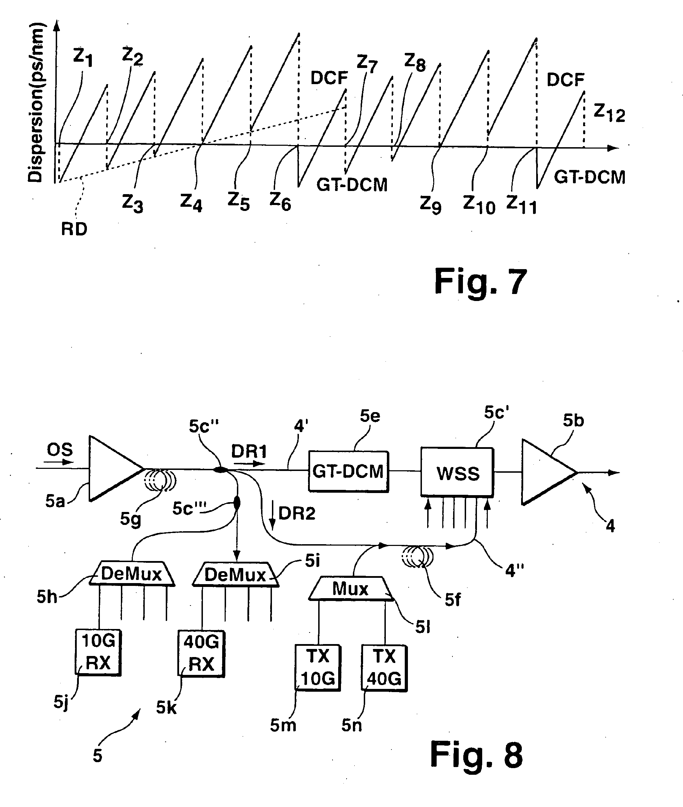

**Fig. 7** further illustrates this special feature in accordance with the present invention for the case n = 5, i.e. every fifth fibre span of an optical transmission system in accordance with the present invention (cf. Fig. 1) comprises a network element 5 in accordance with the present invention. Fig. 7 is a schematic diagram wherein dispersion measured in picoseconds per nanometer (ps/nm) is plotted as a function of length z of an optical transmission link 4 (cf. Fig. 1). As will be appreciated by a person skilled in the art, the diagram of Fig. 7 is valid for the first data rate (e.g., 10 Gbit/s) tributary signals only: While in fact the dispersion map is the same for both bit rates, at the second bit rate (e.g., 40Gbit/s) dispersion compensation is accomplished solely by means of DCF whereas additional GT-DCMs are employed for 10Gbit/s transmission only. In this context, the diagram of Fig. 7 also gives the repartition of DCF modules and GT-DCMs in an optical transmission system 1 in accordance with the present invention: In Fig. 7, DCF modules are located at z-positions **z₁-z₁₂,** whereas GT-DCMs are located at z-positions **z₁, z₆,** and **z₁₁,** only. As can be gathered from Fig. 7, dispersion compensation by DCF alone leaves a residual dispersion as illustrated by means of asymptotic line **RD** which is effectively compensated by means of the GT-DCMs deployed on the optical transmission link 4 within the network elements in accordance with the present invention, thus significantly reducing the impact of XPM without interfering with the transmission of second data rate tributary signals, e.g. 40 Gbit/s signals, which are not compatible with standard GT-DCMs.

**Fig. 8** shows a block diagram of a fifth embodiment of the network element 5 in accordance with the present invention, as comprised in the optical transmission system 1 of Fig. 1. The embodiment of Fig. 8 is basically similar to that of Fig. 4 described above, and same or similar elements have been assigned the same reference numerals. As explained in connection with Fig. 4, the network element 5 of Fig. 8 comprises a third dispersion compensating module (DCM) 5g arranged between the input OFA 5a and the band demultiplexing means which in the present embodiment is devised as a first optical coupler **5c"**. The coupler **5c"** is connected via a second optical coupler **5.c'"** with demultiplexing means 5h and with demultiplexing means 5i. In operative connection with demultiplexing means 5h there are provided a number of receiver units 5j adapted for receiving tributary signals of said first data rate, i.e. 10 Gbit/s, as already explained above with reference to appended Fig. 4. In operative connection with demultiplexing means 5i there are provided a number of receiver units 5k adapted for to receive tributary signals with said second data rate, i.e. 40 Gbit/s, as already explained above with reference to appended Fig. 4. Said first optical coupler 5c" is further connected with the (bypass) branch 4" for bypassing the GT-DCM 5e, as previously described. Upstream of the DCF compensating module 5f said branch 4" is operatively connected with multiplexing means 5l, which in turn is connected with first transmitter unit 5m and with second transmitter unit 5n, as described farther up. The first transmitter unit 5m is devised for transmitting tributary signals with said first data rate, i.e. 10 Gbit/s, and the second transmitter unit 5n is devised for transmitting tributary signals with the second data rate, i.e. 40 Gbit/s. Branches 4', 4" are recombined by means of WSS 5c' located in branch 4' upstream of output OFA 5b'.

In this way and in contrast to the embodiment of Fig. 4, in the above-described embodiment of network element 5 of Fig. 8 the WSS 5c' is used as a multiplexing means only. This may prove advantageous, since it has been found difficult to devise wavelength-selective switches with 50 Hz spacing between individual channels. In particular, a problem commonly encountered with wavelength-selective switches is inter-channel crosstalk, i.e., when extracting a given channel on one port of the WSS one always obtains a residual signal from other wavelengths, too. Therefore, the aforementioned embodiment of the network element in accordance with the present invention uses a WSS only as multiplexing means, but not as demultiplexing means, such that constraints with respect to crosstalk are of minor importance.

## Claims

1. A network element (5) for use in a Wavelength Division Multiplex optical transmission system (1), comprising:
- at least one demultiplexing means (5c; 5c'; 5.1c', 5.2c', 5.3c') adapted to demultiplex a received wavelength division multiplex signal (OS; OS1, OS2, OS3) into constituent wavelength channels (WB1, WB2, WBi) carrying tributary signals with at least a first (DR1) and at least a second data rate (DR2),
- at least one first Dispersion Compensating Module (5e; 5.1e, 5.2e, 5.4e)adapated to compensate chromatic dispersion within separate spectral bands and connected with the demultiplexing means for receiving constituent wavelength channels carrying tributary signals having said first data rate,
- at least one bypass (4"; 4. 1 ", 4.2", 4.4") bypassing the first dispersion compensating module and connected with the demultiplexing means for receiving constituent wavelength channels carrying tributary signals having said second data rate,
**characterised in that** said network element (5) comprises at least one multiplexing means (5l; 5.1l, 5.2l, 5.4l) for adding tributary signals of said first and /or second data rates, wherein the multiplexing means (5l; 5.1l, 5.2l, 5.41) is connected with said bypass (4"; 4.1", 4.2", 4.4").

2. The network element (5) of claim 1, wherein the first dispersion compensating module (5e; 5.1e, 5.2e, 5.4e) is at least one of a Gires-Tournois Dispersion Compensating Module, a Virtually Imaged Phased Array (VIPA), a ring resonator, and a fibre Bragg grating (FBG).

3. The network element (5) of claim 1, further comprising a second dispersion compensating module (5f; 5.1f, 5.2f, 5.4f) arranged in said bypass (4"; 4.1", 4.2", 4.4").

4. The network element (5) of claim 3, wherein said second dispersion compensating module (5f; 5.1f, 5.2f, 5.4f) is a Dispersion Compensating Fibre (DCF).

5. The network element (5) of claim 1, further comprising at least one further demultiplexing means (5d) for dropping tributary signals of said first and / or second data rates.

6. A Wavelength Division Multiplex optical transmission system (1), comprising:
- at least one source (2) of wavelength division multiplex optical signals (OS; OS1 - OS3) having constituent wavelength channels (WB1, WB2, WBi; WBj) which carry tributary signals with at least a first (DR1) and at least a second (DR2) data rate,
- a number of optical fibre spans (4.1, 4.2, 4.3, 4.4,..., 4.n) for propagating said optical signals,
- at least one node for connecting a number of optical fibre spans, said node comprising the network element (5) of any one of claims 1 to 5.

7. The optical transmission system (1) of claim 6, wherein the constituent wavelength channels associated with the first data rate (DR1) have a first bandwidth (BW1) and wherein the constituent wavelength channels associated with the second data rate (DR2) have a second bandwidth (BW2) different from the first bandwidth, and wherein respective characteristic wavelengths (CWj) of the constituent wavelength channels associated with the second data rate (DR2) are shifted relative to a periodic comb of the constituent wavelength channels associated with the first data rate (DR1).

8. A method of transmitting optical wavelength division multiplex signals (OS; OS1 - OS3), said optical signals having constituent wavelength channels (WB1, WB2, WBi; WBj) which carry tributary signals with at least a first (DR1) and at least a second data rate (DR2), wherein the optical signals are demultiplexed into their constituent wavelength channels, wherein tributary signals of said first data rate (DR1) are routed to a dispersion compensating module (5e; 5.1e, 5.2e, 5.4e), in particular a Gires-Tournois Dispersion Compensating Module, while tributary signals of said second data rate (DR2) are routed to bypass said dispersion compensating module,
**characterised by** the step of adding tributary signals of said first and / or second data rates to said bypassed tributary signals of said second data rate.

## Patentansprüche

1. Netzwerkelement (5) zur Verwendung in einem optischen Wellenlängenmultiplex-Übertragungssystem (1), umfassend:
- Mindestens ein Demultiplexmittel (5c; 5c'; 5.1c', 5.2c', 5.3c'), dazu ausgelegt, ein empfangenes Wellenlängenmultiplexsignal (OS; OS1, OS2, OS3) in einzelne Wellenlängenkanäle (WB1, WB2, WBi), welche Tributary-Signale mit mindestens einer ersten (DR1) und mindestens einer zweiten Datenrate (DR2) transportieren, zu demultiplexen,
- mindestens ein erstes Dispersionskompensationsmodul (5e; 5.1e, 5.2e, 5.4e), welches dazu ausgelegt ist, die chromatische Dispersion in separaten Spektralbändern zu kompensieren und mit dem Demultiplexmittel zum Empfangen der einzelnen Wellenlängenkanäle, die Tributary-Signale mit der besagten ersten Datenrate transportieren, verbunden ist,
- mindestens einen Bypass (4"; 4.1", 4.2", 4.4"), welcher das erste Dispersionskompensationsmodul überbrückt und mit dem Demultiplexmittel verbunden ist, um einzelne Wellenlängenkanäle, die Tributary-Signale mit der besagten zweiten Datenrate transportieren, zu empfangen,
**dadurch gekennzeichnet, dass** das besagte Netzwerkelement (5) mindestens ein Multiplexmittel (51; 5.11, 5.21, 5.41) zum Hinzufügen von Tributary-Signalen der besagten ersten und/oder der besagten zweiten Datenrate umfasst, wobei das Multiplexmittel (5l; 5.1l, 5.2l, 5.4l) mit dem besagten Bypass (4"; 4.1 ", 4.2", 4.4") verbunden ist.

2. Netzwerkelement (5) nach Anspruch 1, wobei das erste Dispersionskompensationsmodul (5e; 5.1e, 5.2e, 5.4e) mindestens entweder ein Gires-Tournois-Dispersionskompensationsmodul, ein virtuell abgebildetes Phasen-Array (VIPA), ein Ringresonator oder ein faseroptisches Bragg-Gitter (FBG) ist.

3. Netzwerkelement (5) nach Anspruch 1, weiterhin umfassend ein in dem besagten Bypass (4"; 4.1 ", 4.2", 4.4") angeordnetes zweites Dispersionskompensationsmodul (5f; 5.1f, 5.2f, 5.4f).

4. Netzwerkelement (5) nach Anspruch 3, wobei das besagte zweite Dispersionskompensationsmodul (5f; 5.1 f, 5.2f, 5.4f) eine Dispersionskompensationsfaser (DCF) ist.

5. Netzwerkelement (5) nach Anspruch 1, weiterhin umfassend mindestens ein weiteres Demultiplexmittel (5d) zum Abwerfen von Tributary-Signalen der besagten ersten und/oder der besagten zweiten Datenrate.

6. Optisches Wellenlängenmultiplex-Übertragungssystem (1), umfassend:
- Mindestens eine Quelle (2) optischer Wellenlängenmultiplexsignale (OS; OS1 - OS3) mit einzelnen Wellenlängenkanälen (WB1, WB2, WBi; WBj), welche Tributary-Signale mit mindestens einer ersten (DR1) und mindestens einer zweiten (DR2) Datenrate transportieren,
- eine Anzahl von optischen Faserstrecken (4.1, 4.2, 4.3, 4.4, ..., 4.n) zum Ausbreiten der besagten optischen Signale,
- mindestens einen Knoten zum Verbinden einer Anzahl von optischen Faserstrecken, wobei der besagte Knoten das Netzwerkelement (5) eines beliebigen der Ansprüche 1 bis 5 umfasst.

7. Optisches Übertragungssystem (1) nach Anspruch 6, wobei die mit der ersten Datenrate (DR1) assoziierten einzelnen Wellenlängenkanäle eine erste Bandbreite (BW1) aufweisen, und wobei die mit der zweiten Datenrate (DR2) assoziierten einzelnen Wellenlängenkanäle (DR2) eine zweite Bandbreite (BW2), welche sich von der ersten Bandbreite unterscheidet, aufweisen, und wobei entsprechende charakteristische Wellenlängen (CWj) der mit der zweiten Datenrate (DR2) assoziierten einzelnen Wellenlängenkanäle in Bezug auf einen periodischen Kamm der mit der ersten Datenrate (DR1) assoziierten einzelnen Wellenlängenkanäle verschoben werden.

8. Verfahren zur Übertragung von optischen Wellenlängenmultiplexsignalen (OS; OS1 - OS3), wobei die besagten optischen Signale einzelne Wellenlängenkanäle (WB1, WB2, WBi; WBj) aufweisen, welche Tributary-Signale mit mindestens einer ersten (DR1) und mindestens einer zweiten Datenrate (DR2) transportieren, wobei die optischen Signale in deren einzelnen Wellenlängenkanälen gedemultiplext werden, wobei Tributary-Signale der besagten ersten Datenrate (DR1) an ein Dispersionskompensationsmodul (5e; 5.1e, 5.2e, 5.4e), insbesondere ein Gires-Tournois-Dispersionskompensationsmodul, geroutet werden, während Tributary-Signale der besagten zweiten Datenrate (DR2) derart geroutet werden, dass sie das besagte Dispersionskompensationsmodul überbrücken,
**gekennzeichnet durch** den Schritt des Hinzufügens von Tributary-Signalen der besagten ersten und/oder der besagten zweiten Datenrate zu den besagten umgeleiteten Tributary-Signalen der besagten zweiten Datenrate.

## Revendications

1. Élément de réseau (5) à utiliser dans un système de transmission optique (1) à multiplexage par répartition en longueur d'onde, comprenant :
- au moins un moyen de démultiplexage (5c ; 5c' ; 5.1c', 5.2c', 5.3c') adapté pour démultiplexer un signal à multiplexage par répartition en longueur d'onde reçu (OS ; OS1, OS2, OS3) en canaux de longueur d'onde constitutifs (WB1, WB2, WBi) transportant des signaux tributaires ayant au moins un premier (DR1) et au moins un deuxième débit de données (DR2),
- au moins un premier module de compensation de la dispersion (5e ; 5.1e, 5.2e, 5.4e) adapté pour compenser la dispersion chromatique à l'intérieur des bandes spectrales séparées et connecté aux moyens de démultiplexage pour recevoir les canaux de longueur d'onde constitutifs transportant des signaux tributaires ayant ledit premier débit de données,
- au moins un contournement (4" ; 4.1", 4.2", 4.4") contournant le premier module de compensation de la dispersion et connecté avec les moyens de démultiplexage pour recevoir les canaux de longueur d'onde constitutifs transportant des signaux tributaires ayant ledit deuxième débit de données,
**caractérisé en ce que** ledit élément de réseau (5) comprend au moins un moyen de multiplexage (5l ; 5.1l, 5.21, 5.4l) pour ajouter des signaux tributaires auxdits premier et/ou deuxième débits de données, les moyens de multiplexage (5l ; 5.1l , 5.2l, 5.4l) étant connectés audit contournement (4" ; 4.1 ", 4.2", 4.4").

2. Élément de réseau (5) selon la revendication 1, avec lequel le premier module de compensation de la dispersion (5e ; 5.1 e, 5.2e, 5.4e) est au moins l'un des suivants : module de compensation de la dispersion de Gires-Tournois, réseau à commande de phase à représentation virtuelle (VIPA), résonateur en anneau et réseau de Bragg sur fibre (FBG).

3. Élément de réseau (5) selon la revendication 1, comprenant en outre un deuxième module de compensation de la dispersion (5f ; 5.1f, 5.2f, 5.4f) disposé dans ledit contournement (4" ; 4.1 ", 4.2", 4.4").

4. Élément de réseau (5) selon la revendication 3, avec lequel ledit deuxième module de compensation de la dispersion (5f ; 5.1 f, 5.2f, 5.4f) est une fibre de compensation de la dispersion (DCF).

5. Élément de réseau (5) selon la revendication 1, comprenant en outre au moins un moyen de démultiplexage supplémentaire (5d) pour extraire les signaux tributaires ayant lesdits premier et/ou deuxième débits de données.

6. Système de transmission optique (1) à multiplexage par répartition en longueur d'onde, comprenant :
- au moins une source (2) de signaux optiques (OS ; OS1 - OS3) à multiplexage par répartition en longueur d'onde possédant des canaux de longueur d'onde constitutifs (WB1, WB2, WBi ; WBj) qui transportent des signaux tributaires ayant au moins un premier (DR1) et au moins un deuxième (DR2) débit de données,
- un certain nombre de tronçons de fibre optique (4.1, 4.2, 4.3, 4.4,..., 4.n) pour la propagation desdits signaux optiques,
- au moins un noeud pour connecter un certain nombre de tronçons de fibre optique, ledit noeud comprenant l'élément de réseau (5) selon l'une quelconque des revendications 1 à 5.

7. Système de transmission optique (1) selon la revendication 6, avec lequel les canaux de longueur d'onde constitutifs associés au premier débit de données (DR1) présentent une première largeur de bande (BW1) avec lequel les canaux de longueur d'onde constitutifs associés au deuxième débit de données (DR2) présentent une deuxième largeur de bande (BW2) différente de la première largeur de bande, et avec lequel les longueurs d'onde caractéristiques respectives (CWj) des canaux de longueur d'onde constitutifs associés au deuxième débit de données (DR2) sont décalées par rapport à un peigne périodique des canaux de longueur d'onde constitutifs associés au premier débit de données (DR1).

8. Procédé de transmission de signaux optiques (OS ; OS1 - OS3) à multiplexage par répartition en longueur d'onde, lesdits signaux optiques possédant des canaux de longueur d'onde constitutifs (WB1, WB2, WBi ; WBj) qui transportent des signaux tributaires ayant au moins un premier (DR1) et au moins un deuxième (DR2) débit de données, les signaux optiques étant démultiplexés en leurs canaux de longueur d'onde constitutifs, les signaux tributaires ayant ledit premier débit de données (DR1) étant acheminés vers un module de compensation de la dispersion (5e ; 5.1 e, 5.2e, 5.4e), notamment un module de compensation de la dispersion de Gires-Tournois, alors que les signaux tributaires ayant ledit deuxième débit de données (DR2) sont acheminés de manière à contourner ledit module de compensation de la dispersion,
**caractérisé par** l'étape d'ajout de signaux tributaires ayant ledit premier et/ou ledit deuxième débits de données auxdits signaux tributaires contournés ayant ledit deuxième débit de données.
